# EUROPEAN PATENT SPECIFICATION

(11) **EP 1 502 677 B1**
(45) Date of publication and mention of the grant of the patent: **12.09.2007**
(21) Application number: 04016971.6
(22) Date of filing: 19.07.2004
(51) Int. Cl.: B22D 11/115

(54) **Mold for continuous casting**
Stranggiesskokille
Lingotière de coulée continue

(30) Priority: 01.08.2003 JP 2003205251
(43) Date of publication of application: 02.02.2005
(73) Proprietor: Nippon Steel Corporation, Tokyo 100 (JP); Nippon Steel Engineering Co., Ltd, Tokyo 100-8071 (JP)
(72) Inventor: Miura, Yasuaki, Chiyoda-ku, Tokyo 100-8071 (JP); Fukuokaya, Toshirou, Chiyoda-ku, Tokyo 100-8071 (JP); Hara, Hiromi, Chiyoda-ku, Tokyo 100-8071 (JP); Takahashi, Hiroyuki, Chiyoda-ku, Tokyo 100-8071 (JP); Iwasaki, Junya, Tobata-ku, Kitakyushu-shi, Fukuoka (JP); Yamaguchi, Toshinobu, Tobata-ku, Kitakyushu-shi, Fukuoka (JP)
(74) Representative: Vossius & Partner

(56) References cited:
- EP-A- 0 577 831
- US-A- 4 040 467
- US-A- 4 424 856
- US-A- 4 518 027
- US-A- 5 613 548
- US-A- 5 727 615

## Description

The present invention relates to the shape and structure of a mold for continuous casting. In particular, the present invention relates to the shape and structure of a mold for continuous casting having an electromagnetic stirring apparatus, which is equipped for stirring molten steel in the continuous casting mold.

Electromagnetically stirring molten steel in a continuous casting mold has been used in the background art to eliminate non-metallic inclusions or gas contained in the poured molten steel. A molten steel continuous casting mold equipped with an electromagnetic stirring apparatus has been used for this purpose. Specifically, a molten steel continuous casting mold equipped with an electromagnetic stirring apparatus according to the background art includes a copper plate for forming a casting space. An electromagnetic stirring apparatus housing is installed in contact with the copper plate for accommodating the electromagnetic stirring apparatus. A water feeding header and a drainage header are also included in the molten steel continuous casting mold. In many cases, a back plate, e.g., made of stainless steel, is mounted between the copper plate and the electromagnetic stirring apparatus housing to reinforce a rigidity of the molten steel continuous casting mold. In the background art, the water feeding header and the drainage header are disposed below the electromagnetic stirring apparatus housing so that the electromagnetic stirring apparatus housing can be set on the upper portion of the mold, which is one of the features of the disclosed technology. Setting an electromagnetic stirring apparatus on the upper portion of the mold makes it possible to improve the stirring of the molten steel. This leads to a steel product such as a cast slab having an excellent surface quality.

The copper plate for forming the casting space always contacts the high temperature molten steel in the mold. This can cause cracking and erosion of the copper plate. Therefore, it becomes necessary to dismantle the copper plate for repair or replacement. However, many molten steel continuous casting molds with an electromagnetic stirring apparatus according to the background art include the copper plate and the electromagnetic stirring apparatus housing being fixed with a bolt located inside the electromagnetic stirring apparatus housing. For this reason, when the copper plate is dismantled for replacement or repair, it is also necessary to dismantle the electromagnetic stirring apparatus accommodated in the housing. In other words, a majority of the parts constituting the mold must be disassembled, which consumes a lot of time. One solution to reduce the time would be to keep a spare unit having an integrated electromagnetic stirring apparatus housing and copper plate. It would then be possible to replace both the housing and the copper plate at the same time with the spare unit when repair or replacement of the old copper plate is needed. However the provision of a spare unit can be very expensive.

In the situation where a back plate is mounted between the copper plate and the electromagnetic stirring apparatus housing to reinforce a rigidity of a molten steel continuous casting mold, a distance between the molten steel in the mold and an iron core of the electromagnetic stirring apparatus increases due to the thickness of the back plate. This leads to a reduction of the electromagnetic stirring thrust of the electromagnetic stirring apparatus.

An object of the present invention is to provide a structure that makes it easier to dismantle the copper plate in a molten steel continuous casting mold. The casting mold includes a copper plate for forming a casting space (a horizontal section of the copper plate is usually approximately rectangular; however, other shapes are possible as well), a back plate and an electromagnetic stirring apparatus housing. The back plate is disposed outside of the copper plate and in contact with the copper plate to reinforce the rigidity of the casting mold. The electromagnetic stirring apparatus housing accommodates an electromagnetic stirring apparatus inside.

Another object of the present invention is to provide a structure to prevent a reduction of the electromagnetic stirring thrust due to the inclusion of a back plate.
The object above can be achieved by the features defined in the claims. The present invention can be summarized as follows.

One aspect of the present invention is directed to a molten steel continuous casting mold, comprising: a copper plate, said copper plate for forming a casting space; a back plate disposed outside of and contacting said copper plate; and an electromagnetic stirring apparatus housing disposed outside of the back plate, said electromagnetic stirring apparatus housing accommodating an electromagnetic stirring apparatus therein, wherein a wall of the electromagnetic stirring apparatus housing which contacts the back plate has an extended portion, and the back plate and the electromagnetic stirring apparatus housing are fixed together by a bolt located at only the extended portion of said wall of the electromagnetic stirring apparatus housing.

A second aspect of the present invention is directed to a molten steel continuous casting mold, comprising: a copper plate, said copper plate for forming a casting space; a back plate disposed outside of and contacting said copper plate; and an electromagnetic stirring apparatus housing disposed outside of the back plate, said electromagnetic stirring apparatus housing accommodating an electromagnetic stirring apparatus therein, wherein a wall of the electromagnetic stirring apparatus housing which contacts the back plate has an opening formed therethrough, said opening receiving an end of an iron core of the electromagnetic stirring apparatus therein.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

The present invention will become more fully understood from the detailed description given hereinbelow and the accompanying drawings which are given by way of illustration only, and thus are not limitative of the present invention, and wherein:

Figure 1 is a vertical sectional view of one half of the mold including a long copper plate according to one embodiment of the present invention;

Figure 2 is a vertical sectional view of the mold of Figure 1 along the line 2-2 of Figure 1;

Figure 3 is a vertical sectional view of one half of the mold of another embodiment of the present invention;

Figure 4-1 is a graph showing a relation between a distance from an end of an iron core to an inner surface of a casting space and a rigidity of a casting mold;

Figure 4-2 is a graph showing a relation between a distance from an end of an iron core to an inner surface of a casting space and an index number representing a thrust of electromagnetic stirring; and

Figure 5 is an explanatory view of how to dismantle a copper plate of a mold for continuous casting.

The present invention will now be described below with reference to the accompanying figures. A molten steel continuous casting mold (hereinafter referred to simply as a "mold") includes a pair of opposing long copper plates and a pair of opposing short copper plates which are disposed in directions orthogonal to each other to form an approximately rectangular casting space. Molten steel is poured in the casting space from above. The continuous casting mold of the present invention operates in generally the same manner as a continuous casting mold according to the background art. In view of this, only the differences between the present invention and the background art will be discussed below.

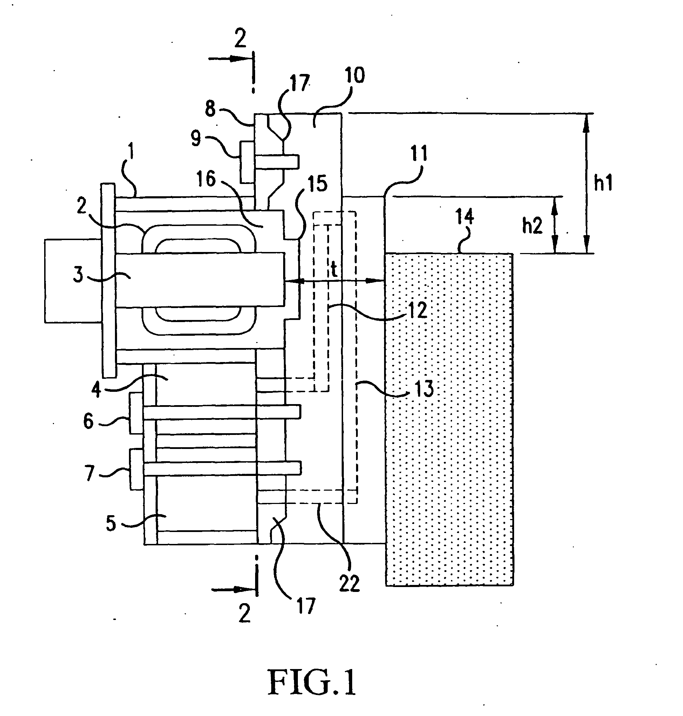

Figure 1 shows a vertical section of one half of the mold including a long copper plate according to one embodiment of the present invention. As should be understood, a vertical section of the mold through the other long copper plate would have a similar structure to the vertical section of Figure 1. Accordingly, only one of the long copper plates will be specifically discussed. In Figure 1, a back plate 10 is fixed to one wall 8 of the electromagnetic stirring apparatus housing 1 by bolts 6, 7, and 9. The wall 8 of the electromagnetic stirring apparatus housing 1 and a back plate 10 have cooperating concave/convex structure portions 17. In view of this, a concave portion of the wall 8 can fit in a convex portion of the back plate 10 and a convex portion of the wall 8 can fit in a concave portion of the back plate 10. The wall 8 and the back plate 10 are fixed together by bolts 6, 7 and 9. The concave/convex structure portions 17 of the wall 8 and the back plate 10 make it easy to position the wall 8 and back plate 10 together for assembly; however, such structure is described only as preferable. Fixing the back plate 10 to the wall 8 of the electromagnetic stirring apparatus housing 1 increases the rigidity of the mold. The back plate 10 is also fixed to the copper plate 11, which forms the casting space in which the molten steel 14 is poured. The back plate 10 is made of, for example, stainless steel. The back plate 10 and the copper plate 11 can be fixed using any well-known manner such as welding, pinning, bolting or the like. The wall 8 of the electromagnetic stirring apparatus housing 1 and the other walls of the electromagnetic stirring apparatus housing 1 can be fixed together by welding. An electromagnetic stirring apparatus including an iron core 3 is accommodated in the electromagnetic stirring apparatus housing 1. It is significant to note that the bolts 6, 7, and 9 fixing the wall 8 of the housing 1 and the back plate 10 are not located inside the housing 1.

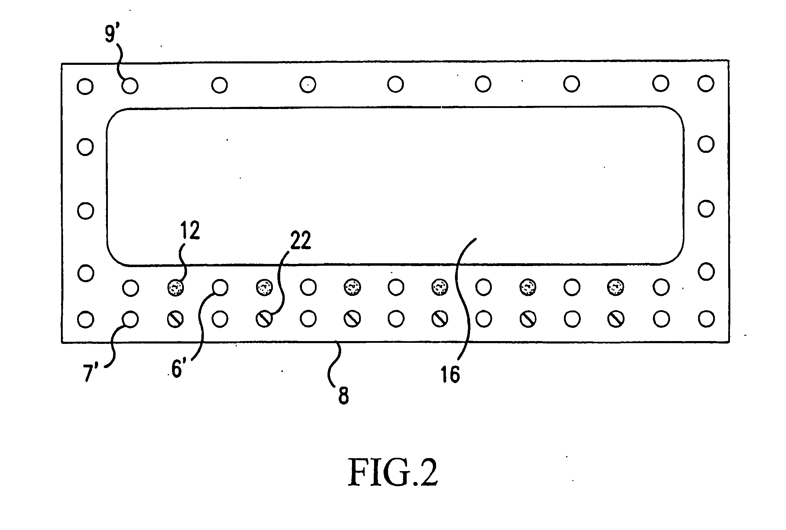

Generally, in a mold having an electromagnetic stirring apparatus housing disposed at a position close to a surface level of the molten steel, a bolt for fixing a wall of the electromagnetic stirring apparatus housing to a back plate has been located inside the electromagnetic stirring apparatus housing. On the contrary, in the present invention, the wall 8 of the electromagnetic stirring apparatus housing 1 has an extended portion and the wall 8 and the back plate 10 are fixed to each other by only a bolt located at the area of the extended portion (outside of the electromagnetic stirring apparatus housing). In Figure 1, the wall 8 extends in upward, downward, left and right directions from the outside of the housing 1. A top end of the top extended portion and a top end of the back plate 10 are positioned at the same level. A condition h₁ > h₂ is satisfied, where h₁ is a distance between a top end of the top extended portion (or the back plate 10) and a surface level 14 of the molten steel in the casting space, and h₂ is a distance between a top end of the copper plate 11 and a surface level 14 of the molten steel in the casting space. In other words, the top ends of the top extended portion and the back plate 10 are positioned above the top end of the copper plate 11. The bolt 9 that fixes the wall 8 and the back plate 10 is located at the area of the top extended portion positioned above the top end of the copper plate 11. In addition, the bolts 6 and 7 that fix the wall 8 and the back plate 10 are located at the area of the bottom extended portion. It should be noted that additional bolts 6', 7' and 9', respectively, are received in the remaining bolt holes in the top, bottom, right and left extended portions of the wall 8 in order to further connect the wall 8 to the back plate 10 (see Figure 2).

It has been believed that extending a back plate or the like upward beyond a top end of the copper plate would make it difficult to perform a casting operation with the molten steel into a mold. In addition, it has been believed that adding powder to the molten steel and operations carried out from the floor located above the mold for removing impurities on the surface of the molten steel would also be difficult to perform with a top extended portion. Therefore, in the background art, when an electromagnetic stirring apparatus is installed at an upper portion of the mold, close to the surface level of the molten steel in the mold, a position of the fixing bolts has been inside the electromagnetic stirring apparatus housing to fix the housing and the back plate sufficiently. In view of this, when the copper plate is dismantled for replacement or repair, it is also necessary to first dismantle the electromagnetic stirring apparatus accommodated in the housing in order to disengage the bolts. In other words, a majority of the parts constituting the mold have to be disassembled.

The mold structure of the present invention has been made in consideration of the above circumstances. Specifically, the present invention has been made to easily carry out operations from the floor located above the mold, increase a rigidity of the mold, increase a fixing strength of the back plate and the electromagnetic stirring apparatus housing, and easily dismantle the copper plate. In the mold of the present invention, the bolts 6, 7, and 9 fixing the wall 8 of the electromagnetic stirring apparatus housing 1 and the back plate 10 are not located inside the housing 1. This can make it very easy to dismantle the copper plate for repair or replacement. The procedure for dismantling the copper plate will be described below.

In Figure 1, the mold is designed to reduce the distance between an end of the iron core 3 facing toward the casting space (hereinafter referred simply to as "end of the iron core") of the electromagnetic stirring apparatus and the molten steel in the casting space for increasing an electromagnetic stirring thrust. The wall 8, has an opening 16 formed therethrough for receiving the end of the iron core 3, so that the end of the iron core 3 can be moved closer to the casting space, i.e., closer to the molten steel. This leads to an increase of the electromagnetic stirring thrust. It should be noted that forming the opening may cause a reduction in the strength of the electromagnetic stirring apparatus housing 1; however, this can be compensated for by fixing the back plate 10 to the housing 1.

In the background art, the bolts used to fix the housing and the copper plate or the housing and the back plate are located inside the housing. Accordingly, it is impossible to form the opening 16 in the wall 8 as in the embodiment of the present invention.

In the present invention; however, the wall 8 of the electromagnetic stirring apparatus housing 1 has an extended portion. The wall 8 and the back plate 10 are fixed to each other by bolts located only at the area of the extended portion (the top, bottom, right and left extended portions). This structure enables the wall 8 to be capable of having the opening 16. In addition, Figure 1 shows that the back plate 10 has a concave portion 15 in communication with the opening, so that a distance between an inner surface of the casting space and the end of the iron core 3 of the electromagnetic stirring apparatus can be reduced.

In the present invention, the wall 8 of the electromagnetic stirring apparatus housing 1 has an extended portion, and the wall 8 and the back plate 10 are fixed to each other by bolts located only at the area of the extended portion. This structure according to the present invention also allows the back plate 10 to have the concave portion 15.

In Figure 1, a water passage 13 is formed by a groove on the surface of the copper plate 11 that faces the back plate 10. Cooling water from a water feeding header 5 disposed below the electromagnetic stirring apparatus housing 1 is fed to the water passage 13 through a water feeding hole 22 formed in the wall 8 and the back plate 10. The cooling water retums into a drainage header 4 through a drainage passage 12 formed in the wall 8 and the back plate 10 after passing through the water passage 13.

It should be noted that the form of the water passage is not limited to the one shown in Figure 1. In addition to the groove on the copper plate 11 in Figure 1, the water passage 13 can be formed by a long hole in the copper plate or a groove on the surface of the back plate 10 that faces the copper plate. It should also be noted that the form of the water drainage passage 12 is not limited to the one shown in Figure 1. In addition to the hole in the back plate in Figure 1, the drainage passage can be formed by a groove on the surface of the back plate 10 that faces the copper plate 11 or a groove on the surface of the copper plate 11 that faces the back plate 10.

Since the water feeding header 5 and the drainage header 4 are disposed below the electromagnetic stirring apparatus housing 1, the electromagnetic stirring apparatus can be mounted on the upper portion of the mold. This leads to a good stirring of the molten steel and results in products, such as cast slabs, that have an excellent surface quality.

Figure 2 is a vertical section of one half of the mold taken on line 2-2 in Figure 1. An opening 16 for receiving an end of the iron core 3 and holes 6', 7' and 9' for receiving the bolts 6, 7 and 9, respectively, are provided in the wall 8. In addition, the wall 8 includes a water feeding hole 22 and a drainage hole 12, which is a part of the drainage passage. Figure 2 indicates that the wall 8 and the back plate 10 are fixed by bolts 6, 7 and 9 at the extended portion of the wall 8 above the top end of the copper plate (above the outside of the electromagnetic stirring apparatus housing at the top extended portion) and at bottom, left and right extended portions. In other words, the bolts connecting the wall 8 and the back plate 10 are located at the top extended portion, the bottom extended portion, the left extended portion and the right extended portion, but are not located within the electromagnetic stirring apparatus housing 1. This provides a good fixing strength between the wall 8 and the back plate 10.

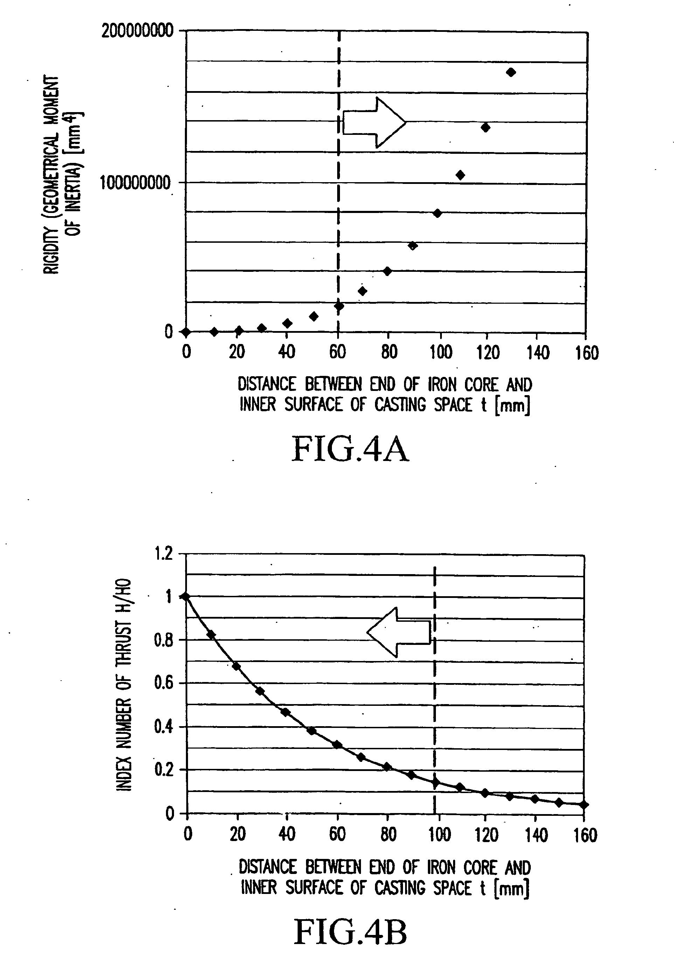

In the example of Figure 1, a thrust increase is obtained by reducing the distance between the end of iron core 3 of the electromagnetic stirring apparatus and the inner surface of the casting space by forming the opening 16 and the concave portion 15 in communication with the opening 16. If the concave portion 15 in the back plate 10 is too deep, the rigidity of the mold may be decreased. Figure 4-1 is a graph showing a relation between a distance from an end of the iron core 3 to an inner surface of a casting space (corresponding to distance "t" in Figure 1) and the rigidity of a casting mold. Figure 4-2 is a graph showing a relation between a distance from an end of the iron core to an inner surface of a casting space (corresponding to distance "t" in Figure 1) and an index number representing an electromagnetic stirring thrust. As shown in Figure 1 and Figure 2, as the distance between an end of iron core and an inner surface of a casting space (corresponding to distance "t" in Figure 1) increases, the rigidity of the mold increases, but the electromagnetic stirring thrust decreases. After substantial analysis, the present inventors have found that a distance "t" for ensuring that there is sufficient rigidity of the mold is 60 mm, and a distance "t" for ensuring that there is sufficient thrust is 100 mm. In other words, a thickness of the back plate 10 and a depth of the concave portion 15 should be designed so that the distance between an end of the iron core 3 and an inner surface of a casting space is between 60 mm and 100 mm.

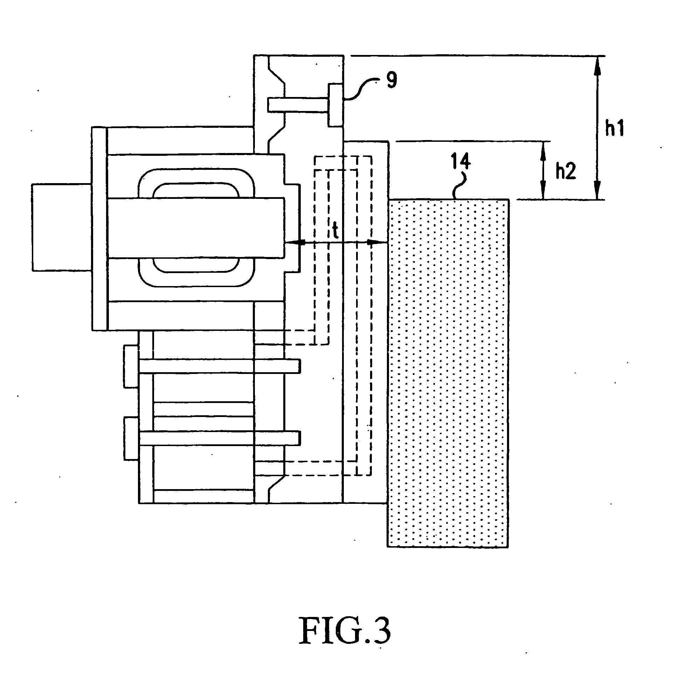

Figure 3 is a vertical section of one half of the mold of another embodiment of the present invention. In the present invention, the wall 8 of the electromagnetic stirring apparatus housing 1 has an extended portion and the wall 8 and the back plate 10 are fixed to each other by bolts located only at the area of the extended portion. This structure enables the bolt to be removed and to fix the wall 8 and the back plate 10 from the area outside of the electromagnetic stirring apparatus housing 1. In particular, as shown in Figure 1, the wall 8 extends upward from the housing 1. The top ends of the extended portion and the back plate 10 are positioned above the top end of the copper plate 11. The bolts 9 used to fix the wall 8 and the back plate 10 are located at the area of the extended portion positioned above the top end of the copper plate 11. This top extended portion above the top end of the copper plate 11 has to have a space for setting the bolts 9. In view of this, in the structure shown in Figure 3, the bolts 9 are screwed in from the casting space side toward the outside. This makes it possible to reduce the distance h₁ as much as possible when compared to the structure in Figure 1.

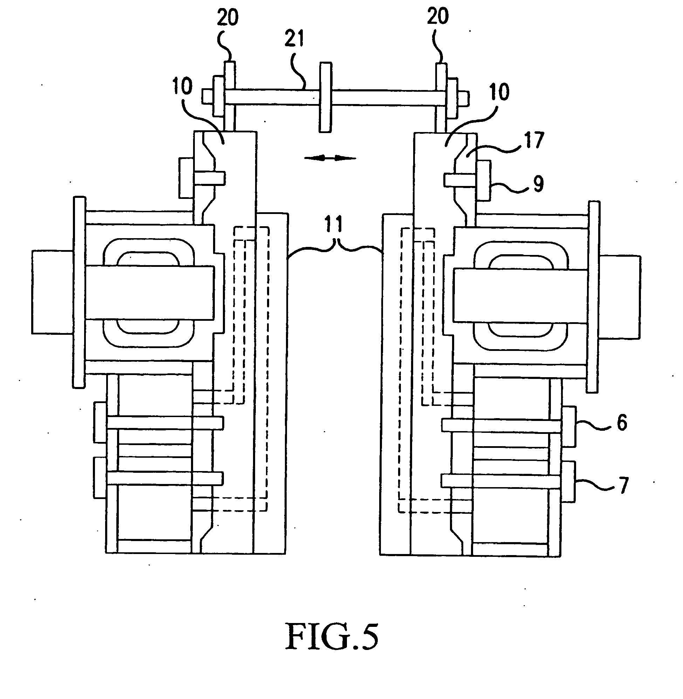

According to the present invention, it is possible to dismantle the copper plate very easily. The procedure for dismantling the copper plate will be described with reference to Figure 5 below. A maintenance piece 20 having a width-adjusting bolt 21 is fixed on the top end portion of the back plate 10. The bolts 6, 7, and 9 are then unscrewed so that the wall 8 and the back plate 10 can be detached from each other. By turning the width-adjusting bolt 21, the back plate 10 and the copper plate 11 are moved inward toward the casting space by a distance equal to the depth of the concave/convex structure 17. The back plate 10 and the copper plate 11 are then lifted up with a crane (not shown) to be removed from the mold. A reverse procedure is used to re-assemble the copper plate 11 and the back plate 10.

The present invention makes it possible to dismantle the copper plate 11 very easily, which results in a great reduction of operation time for replacement of the copper plate 11. The present invention also makes it possible to avoid the necessity of a spare unit for the electromagnetic stirring apparatus housing 1, which results in a decrease in cost. Furthermore, the present invention makes it possible to reduce the distance between the electromagnetic stirring apparatus and the molten steel in the casting space, which can avoid a degradation of the electromagnetic stirring thrust.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. A molten steel continuous casting mold, comprising:
a copper plate (11), said copper plate forming a casting space;
a back plate (10) disposed outside of and contacting said copper plate; and
an electromagnetic stirring apparatus housing (1) disposed outside of the back plate, said electromagnetic stirring apparatus housing accommodating an electromagnetic stirring apparatus therein, **characterized in that**
a wall (8) of the electromagnetic stirring apparatus housing which contacts the back plate has an extended portion, and the back plate and the electromagnetic stirring apparatus housing are fixed together by at least one bolt (6,7,9) located at only the extended portion of said wall of the electromagnetic stirring apparatus housing.

2. The molten steel continuous casting mold according to claim 1, wherein said wall of the electromagnetic stirring apparatus housing has an opening (16) located inside the electromagnetic stirring apparatus housing.

3. The molten steel continuous casting mold according to claim 2, wherein said opening receives an end of an iron core (3) of the electromagnetic stirring apparatus therein.

4. The molten steel continuous casting mold according to claim 3, wherein a distance between the end of the iron core (3) of the electromagnetic stirring apparatus and an inner surface of the casting space ranges from 60 mm to 100 mm.

5. The molten steel continuous casting mold according to any one of claim 2 to 4, wherein the back plate has a concave portion (15) in communication with the opening (16).

6. The molten steel continuous casting mold according to any one of claims 1 to 5, wherein a top end of the extended portion and a top end of the back plate are positioned above a top end of the copper plate (11), and the at least one bolt is located at an area of the extended portion positioned above the top end of the copper plate.

7. The molten steel continuous casting mold according to any one of claims 1 to 6, wherein a plurality of bolts are used to fix, the back plate (10) and the electromagnetic stirring apparatus housing (1) together, said plurality of bolts being located at a top extended portion, a bottom extended portion, a left extended portion and a right extended portion, respectively, of the electromagnetic stirring apparatus housing (1).

8. The molten steel continuous casting mold according to any one of claims 1 to 7, wherein there are no bolts located within the electromagnetic stirring apparatus housing, said bolts connecting the wall (8) to the back plate (10).

9. The molten steel continuous casting mold according to any one of claims 1 to 8, further comprising:
a water passage (13) formed on the copper plate and/or the back plate for cooling the copper plate;
a water feeding header (5) connected to the water passage for feeding cooling water into the water passage;
a drainage header (4) connected to the water passage for reserving the water returning from the water passage,
wherein a part of the water feeding header and a part of the drainage header are formed in a part of the extended portion.

10. The molten steel continuous casting mold according to claim 9, wherein the water feeding header (5) and the drainage header (4) are disposed below the electromagnetic stirring apparatus housing.

11. The molten steel continuous casting mold according to claims 9 or 10, wherein the water passage (13) is formed by a groove on a surface of the copper plate (11) facing the back plate (10).

## Patentansprüche

1. Stranggießkokille für Stahlschmelzen, mit:
einer Kupferplatte (11), die Gießraum ausbildet,
einer Rückplatte (10), die außerhalb der Kupferplatte angebracht ist und diese berührt, und
einem Gehäuse (1) für eine elektromagnetische Rührvorrichtung, das außerhalb der Rückplatte angebracht ist, wobei das Gehäuse für eine elektromagnetische Rührvorrichtung eine elektromagnetische Rührvorrichtung aufnimmt, **dadurch gekennzeichnet, dass**:
eine Wand (8) des Gehäuses für die elektromagnetische Rührvorrichtung, welche die Rückplatte berührt, einen verlängerten Bereich aufweist, und die Rückplatte und das Gehäuse für die elektromagnetische Rührvorrichtung durch mindestens einen nur am verlängerten Bereich der Wand des Gehäuses für die elektromagnetische Rührvorrichtung angeordneten Bolzen (6, 7, 9), aneinander befestigt sind.

2. Stranggießkokille für Stahlschmelzen gemäß Anspruch 1, wobei die Wand des Gehäuses für eine elektromagnetische Rührvorrichtung eine Öffnung (16) aufweist, die sich innerhalb des Gehäuses für die elektromagnetische Rührvorrichtung befindet.

3. Stranggießkokille für Stahlschmelzen gemäß Anspruch 2, wobei die Öffnung ein Ende eines Eisenkerns (3) der elektromagnetischen Rührvorrichtung aufnimmt.

4. Stranggießkokille für Stahlschmelzen gemäß Anspruch 3, wobei ein Abstand zwischen dem Ende des Eisenkerns (3) der elektromagnetischen Rührvorrichtung und einer Innenoberfläche des Gießraums zwischen 60 mm und 100 mm beträgt.

5. Stranggießkokille für Stahlschmelzen gemäß einem der Ansprüche 2 bis 4, wobei die Rückplatte einen konkaven Teil (15) in Kommunikation mit der Öffnung (16) aufweist.

6. Stranggießkokille für Stahlschmelzen gemäß einem der Ansprüche 1 bis 5, wobei ein Kopfende des verlängerten Bereichs und ein Kopfende der Rückplatte oberhalb eines Kopfendes der Kupferplatte (11) positioniert ist, und der mindestens eine Bolzen an einer Stelle des verlängerten Bereichs, die oberhalb des Kopfendes der Kupferplatte angeordnet ist, angeordnet ist.

7. Stranggießkokille für Stahlschmelzen gemäß einem der Ansprüche 1 bis 6, wobei mehrere Bolzen verwendet werden, um die Rückplatte (10) und das Gehäuse (1) für die elektromagnetische Rührvorrichtung zu befestigen, wobei die mehreren Bolzen an einem nach oben verlängerten Bereich, einem nach unten verlängerten Bereich, einem nach links verlängerten Bereich bzw. einem nach rechts verlängerten Bereich des Gehäuses (1) für die elektromagnetische Rührvorrichtung angeordnet sind.

8. Stranggießkokille für Stahlschmelzen gemäß einem der Ansprüche 1 bis 7, wobei keine Bolzen innerhalb des Gehäuses für die elektromagnetische Rührvorrichtung angeordnet sind, und die Bolzen die Wand (8) mit der Rückplatte (10) verbinden.

9. Stranggießkokille für Stahlschmelzen gemäß einem der Ansprüche 1 bis 8, die weiterhin aufweist:
einen Wasserdurchlauf (13), der auf der Kupferplatte und/oder der Rückplatte zur Kühlung der Kupferplatte ausgebildet ist,
einem, mit dem Wasserdurchlauf verbundener Wasserzulaufverteilerkopf (5) für den Zulauf von Kühlwasser in den Wasserdurchlauf,
einem, mit dem Wasserdurchlauf verbundenen Wasserablaufverteilerkopf (4) zum Auffangen des vom Wasserdurchlauf zurückgeleiteten Wassers,
wobei ein Teil des Wasserzulaufverteilerkopfes und ein Teil des Wasserablaufverteilerkopfes in einem Teil des verlängerten Bereichs ausgebildet sind.

10. Stranggießkokille für Stahlschmelzen gemäß Anspruch 9, wobei der Wasserzulaufverteilerkopf (5) und der Wasserablaufverteilerkopf (4) unterhalb des Gehäuses für die elektromagnetische Rührvorrichtung positioniert sind,

11. Stranggießkokille für Stahlschmelzen gemäß Anspruch 9 oder 10, wobei der Wasserdurchlauf (13) durch eine Rinne auf einer Oberfläche der Kupferplatte (11) gegenüber der Rückplatte (10) ausgebildet ist.

## Revendications

1. Lingotière de coulée continue d'acier en fusion comprenant :
une plaque de cuivre (11), ladite plaque de cuivre formant un espace de coulée ;
une plaque arrière (10) disposée à l'extérieur et en contact avec ladite plaque de cuivre ; et
un logement d'appareil d'agitation électromagnétique (1) disposé à l'extérieur de la plaque arrière, ledit logement d'appareil d'agitation électromagnétique logeant un appareil d'agitation électromagnétique, **caractérisé en ce qu'**une paroi (8) du logement d'appareil d'agitation électromagnétique en contact avec la plaque arrière comprend une portion étendue et la plaque arrière ainsi que le logement d'appareil d'agitation électromagnétique sont fixés ensemble à l'aide d'au moins un boulon (6, 7, 9) situé seulement au niveau de la portion étendue de ladite paroi du logement d'appareil d'agitation électromagnétique.

2. Lingotière de coulée continue d'acier en fusion selon la revendication 1, dans laquelle ladite paroi du logement d'appareil d'agitation électromagnétique comprend une ouverture (16) située à l'intérieur du logement d'appareil d'agitation électromagnétique.

3. Lingotière de coulée continue d'acier en fusion selon la revendication 2, dans laquelle ladite ouverture reçoit une extrémité d'un noyau de fer (3) de l'appareil d'agitation électromagnétique.

4. Lingotière de coulée continue d'acier en fusion selon la revendication 3, dans laquelle une distance entre l'extrémité du noyau de fer (3) de l'appareil d'agitation électromagnétique et une surface interne de l'espace de coulée est de 60 mm à 100 mm.

5. Lingotière de coulée continue d'acier en fusion selon l'une des revendications 2 à 4, dans laquelle la plaque arrière comprend une portion concave (15) en communication avec l'ouverture (16).

6. Lingotière de coulée continue d'acier en fusion selon l'une des revendications 1 à 5, dans laquelle une extrémité supérieure de la portion étendue et une extrémité supérieure de la plaque arrière se trouvent au-dessus d'une extrémité supérieure de la plaque de cuivre (11) et le au moins un boulon se trouve au niveau d'une zone de la portion étendue positionnée au-dessus de l'extrémité supérieure de la plaque de cuivre.

7. Lingotière de coulée continue d'acier en fusion selon l'une des revendications 1 à 6, dans laquelle une pluralité de boulons est utilisée pour fixer la plaque arrière (10) et le logement d'appareil d'agitation électromagnétique (1) ensemble, ladite pluralité de boulons étant positionnée au niveau d'une portion étendue supérieure, d'une portion étendue inférieure, d'une portion étendue gauche, d'une portion étendue droite, respectivement, du logement d'appareil d'agitation électromagnétique (1).

8. Lingotière de coulée continue d'acier en fusion selon l'une des revendications 1 à 7, dans laquelle aucun boulon ne se trouve à l'intérieur du logement d'appareil d'agitation électromagnétique, lesdits boulons reliant la paroi (8) à la plaque arrière (10).

9. Lingotière de coulée continue d'acier en fusion selon l'une des revendications 1 à 8, comprenant en outre :
un passage d'eau (13) formé sur la plaque de cuivre et/ou sur la plaque arrière pour refroidir la plaque de cuivre ;
un collecteur d'alimentation en eau (5) relié au passage d'eau afin d'introduire l'eau de refroidissement dans le passage d'eau ;
un collecteur de drainage (4) relié au passage d'eau afin de récupérer l'eau revenant du passage d'eau ;
dans laquelle une partie du collecteur d'alimentation en eau et une partie du collecteur de drainage sont formées dans une partie de la portion étendue.

10. Lingotière de coulée continue d'acier en fusion selon la revendication 9, dans laquelle le collecteur d'alimentation en eau (5) et le collecteur de drainage (4) sont disposés en dessous du logement d'appareil d'agitation électromagnétique.

11. Lingotière de coulée continue d'acier en fusion selon les revendications 9 ou 10, dans laquelle le passage d'eau (13) est constitué par une rainure à la surface de la plaque de cuivre (11) qui se trouve en face de la plaque arrière (10).
